# EUROPEAN PATENT APPLICATION

(11) **EP 4 815 463 A1**
(43) Date of publication of application: **30.09.2026**
(21) Application number: 24893594.2
(22) Date of filing: 22.11.2024
(51) Int. Cl.: H04N 21/2187

(54) **LIVESTREAMING INTERACTION METHOD AND APPARATUS, DEVICE, MEDIUM, AND PROGRAM PRODUCT**

(30) Priority: 23.11.2023 CN 202311579291
(71) Applicant: Beijing Zitiao Network Technology Co., Ltd., Beijing 100190 (CN)
(72) Inventor: GUAN, Tiantian, Beijing 100028 (CN); YAO, Yingze, Beijing 100028 (CN); XUE, Tianhui, Beijing 100028 (CN)
(74) Representative: Grünecker Patent- und Rechtsanwälte PartG mbB
(86) International application number: PCT/CN2024/133862
(87) International publication number: WO 2025/108440

(57) **Abstract**

Embodiments of the present disclosure provide a live streaming interaction method, an apparatus, a device, a medium, and a program product. The method includes: generating an associated resource corresponding to a target live stream in response to a resource setting request for the target live stream; and sending acquisition guide information corresponding to the associated resource to a target group in response to a sending request for the associated resource.

## Description

### CROSS-REFERENCE TO RELATED APPLICATION(S)

The present application claims priority to Chinese Patent Application No. 202311579291.X, titled " LIVESTREAMING INTERACTION METHOD, APPARATUS, DEVICE, MEDIUM, AND PROGRAM PRODUCT", filed on November 23, 2023, the disclosure of which is incorporated herein by reference in its entirety.

### FIELD

Embodiments of the present disclosure relate to computer application technologies, and in particular, to a live streaming interaction method and apparatus, a device, a medium, and a program product.

### BACKGROUND

Live streaming has become one of the most favored information interaction methods among users due to its advantages such as intuitiveness and real-time performance in information transmission. With the development of computer technologies, interactive manners that can be supported in live streaming are increasingly enriched.

### SUMMARY

Embodiments of the present disclosure provide a live streaming interaction method and apparatus, a device, a medium, and a program product to further empower interaction capability of a live stream.

In a first aspect, an embodiment of the present disclosure provides a live streaming interaction method. The method includes:
generating, in response to a resource setting request for a target live stream, an associated resource corresponding to the target live stream, where the associated resource is set before the target live stream starts live streaming, and the associated resource is unacquired during the live streaming of the target live stream; and
sending, in response to a sending request for the associated resource, acquisition guide information corresponding to the associated resource to a target group, such that an acquiring end displays response information corresponding to an acquisition trigger operation in response to receiving the acquisition trigger operation for the acquisition guide information.

In a second aspect, an embodiment of the present disclosure further provides a live streaming interaction apparatus. The apparatus includes:
an associated resource setting module configured to generate, in response to a resource setting request for a target live stream, an associated resource corresponding to the target live stream; and
a guidance information sending module configured to send, in response to a sending request for the associated resource, acquisition guide information corresponding to the associated resource to a target group.

In a third aspect, an embodiment of the present disclosure further provides an electronic device. The electronic device includes:
one or more processors; and
a storage configured to store one or more programs,
where the one or more programs, when executed by the one or more processors, cause the one or more processors to implement the live streaming interaction method according to any one of the embodiments of the present disclosure.

In a fourth aspect, an embodiment of the present disclosure further provides a storage medium including computer-executable instructions that, when executed by a computer processor, are configured to perform the live streaming interaction method according to any one of the embodiments of the present disclosure.

In a fifth aspect, an embodiment of the present disclosure further provides a computer program product including a computer program that, when executed by a processor, implements the live streaming interaction method according to any one of the embodiments of the present disclosure.

### BRIEF DESCRIPTION OF THE DRAWINGS

The foregoing and other features, advantages, and aspects of the embodiments of the present disclosure become more apparent with reference to the following specific implementations and in conjunction with the drawings. Throughout the drawings, the same or similar reference numerals denote the same or similar elements. It should be understood that the drawings are schematic and that parts and elements are not necessarily drawn to scale.
Fig. 1 is a schematic flowchart of a live streaming interaction method according to an embodiment of the present disclosure;
Fig. 2 is a schematic flowchart of a live streaming interaction method according to an embodiment of the present disclosure;
Fig. 3 is a schematic diagram of a structure of a live streaming interaction apparatus according to an embodiment of the present disclosure; and
Fig. 4 is a schematic diagram of a structure of an electronic device according to an embodiment of the present disclosure.

### DETAILED DESCRIPTION OF EMBODIMENTS

Hereinafter, embodiments of the present disclosure are described in more detail with reference to the drawings. The drawings illustrate some embodiments of the present disclosure, but it should be understood that the present disclosure may be implemented in various manners and should not be limited to the embodiments set forth herein. Instead, these embodiments are provided for more thorough and complete understanding of the present disclosure. It should be understood that the drawings and the embodiments of the present disclosure are merely illustrative and are not intended to limit the scope of protection of the present disclosure.

It should be understood that steps described in method implementations of the present disclosure may be performed in different orders and/or in parallel. In addition, the method implementations may include additional steps and/or omit some of the illustrated steps. The scope of the present disclosure is not limited in this respect.

As used herein, the term "include/comprise" and variations thereof are open-ended inclusions, that is, "include/comprise but not limited to". The term "based on" is "at least partially based on". The term "an embodiment" means "at least one embodiment"; the term "another embodiment" means "at least one another embodiment"; and the term "some embodiments" means "at least some embodiments". Related definitions of other terms are given in the description hereinafter.

It should be noted that concepts such as "first" and "second" in the present disclosure are merely intended to distinguish one from another apparatus, module, or unit and are not intended to limit the order of or interdependence between functions implemented by the apparatus, the module, or the unit.

It should be noted that modifications of "a" and "a plurality of" mentioned in the present disclosure are intended to be illustrative and not limiting; those skilled in the art should understand that unless clearly indicated in the context, the modifications should be understood as "one or more".

The names of messages or information exchanged between a plurality of apparatuses in the implementations of the present disclosure are intended to be illustrative and are not intended to limit the scope of the messages or information.

It may be understood that before the technical solutions disclosed in the embodiments of the present disclosure are used, the user shall be informed of the type, range of use, use scenarios, etc., of personal information involved in the present disclosure in an appropriate manner and the authorization of the user shall be obtained in accordance with related laws and regulations.

In related technologies, most interactive functions of a live stream are provided for viewers in the live stream, and for a streaming host, interaction mainly relies on voice communication in live streaming. Interactive manners that the streaming host may adopt in the live streaming are relatively limited. For existing interactive functions that may be adopted in live streaming, interactive objects are often only audiences who have entered the live stream, and the scope of live streaming interaction is limited.

In the technical solutions of the embodiments of the present disclosure, the associated resource corresponding to the target live stream is generated in response to the resource setting request for the target live stream, which supports flexible setup of the associated resource for the target live stream; and then, the acquisition guide information corresponding to the associated resource is sent to the target group in response to the sending request for the associated resource, through which efficient sending of the associated resource is implemented through the acquisition guide information and the target group, and linkage between acquiring of the associated resource and the target live stream is implemented. The technical problem of limited interactive manners and scope of interaction in live streaming in related technologies is solved, and the interactive manners of the target live stream may be increased and the scope of interaction may be broadened, thereby enriching the live streaming effect of the target live stream.

For example, in response to receiving an active request from a user, prompt information is sent to the user to clearly inform the user that the requested operation will require access to and use of the user's personal information. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It may be understood that the above process of notifying and obtaining user authorization is merely illustrative and does not limit the implementations of the present disclosure, and other manners that satisfy related laws and regulations may also be applied in the implementations of the present disclosure.

It may be understood that data involved in the technical solution (including but not limited to the data itself, acquisition or use of the data) shall comply with requirements of corresponding laws, regulations, and related provisions.

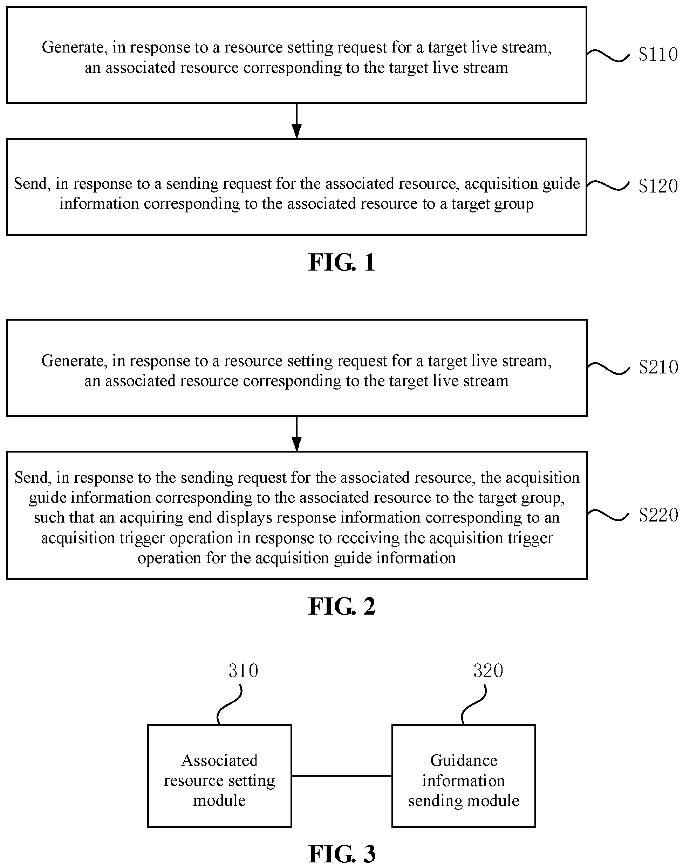

Fig. 1 is a schematic flowchart of a live streaming interaction method according to an embodiment of the present disclosure. The embodiment of the present disclosure is applicable to a case of setting an interactive resource for a live stream. The method may be performed by a live streaming interaction apparatus, which may be implemented in the form of software and/or hardware, optionally, by an electronic device, which may be a mobile terminal, a PC, a server, or the like.

As shown in Fig. 1, the method in this embodiment may specifically include the steps described below.

In S110, an associated resource corresponding to a target live stream is generated in response to a resource setting request for the target live stream.

The target live stream may be understood as a live stream in which an associated resource is to be set. The resource setting request may be understood as a request for setting the associated resource corresponding to the target live stream. The associated resource may be a resource that interacts with the target live stream. Specifically, the associated resource may be a resource that is set by a streaming host and is to be given to a viewing end that watches the target live stream. Exemplarily, the associated resource may include at least one sub-resource.

In the embodiment of the present disclosure, the resource setting request may be generated in a plurality of manners, for example, by triggering a preset functional control, by inputting a preset voice instruction, or by inputting a preset action instruction (such as a hand action or a face action).

Optionally, the step in which the associated resource corresponding to the target live stream is generated in response to the resource setting request for the target live stream includes the steps described below. In response to a trigger operation on a resource setting entry of the target live stream, a resource setting interface is displayed; and in response to an input operation on the resource setting interface, the associated resource corresponding to the target live stream is generated.

The resource setting entry may be understood as a functional entry used to enable setup of the associated resource for the target live stream. Exemplarily, the resource setting entry of the target live stream may be displayed in an associated position of a live stream page of the target live stream in a preset form. Specifically, the resource setting entry may be displayed in a target position, such as at the top, at the bottom, or on a side, of the live stream page of the target live stream in the form of a hyperlink; or the resource setting entry may be displayed in a preset functional module (such as an interaction module) in the live stream page of the target live stream in the form of a control; or the resource setting entry may be displayed in a live streaming setting page of the target live stream, where the live streaming setting page is used to set live streaming information associated with the target live stream, such as the associated resource of the target live stream, a live streaming time, and a live streaming title.

The resource setting interface may be understood as an operation interface used to set detailed information corresponding to the associated resource. Exemplarily, the resource setting interface may include at least content setting information and quantity setting information of a resource. Correspondingly, in response to an operation of inputting content information and quantity information of the resource on the resource setting interface, the associated resource corresponding to the target live stream may be generated based on the input content information and quantity information of the resource.

Optionally, the step of displaying the resource setting interface may include the operations described below. An information display panel is invoked to display the live streaming setting information, the resource setting interface is displayed in the form of a pop-up window, or a jump is made to a first page to display the resource setting interface. Similarly, the step of displaying the resource setting information may also include displaying the resource setting information by invoking the information display panel, displaying the resource setting information in the form of a pop-up window, or making a jump to a second page.

In the embodiment of the present disclosure, the associated resource is set before the target live stream starts live streaming or is set during the live streaming of the target live stream. Optionally, the step in which the associated resource corresponding to the target live stream is generated in response to the resource setting request for the target live stream includes the step described below. Before the target live stream starts live streaming, the associated resource corresponding to the target live stream is generated in response to the resource setting request for the target live stream. In other words, the associated resource is set earlier than the start of the live streaming of the target live stream. In this manner, the associated resource is set in advance and the setup operation is completed before the live streaming starts, which empowers live streaming interaction, avoids interruption of the live streaming, and saves operation time in the live streaming, thereby increasing the interactive manners of the target live stream and enriching the live streaming effect of the target live stream without occupying the live streaming time.

As an optional technical solution of the embodiment of the present disclosure, in a state where the target live stream is live streaming, a candidate interactive item may be displayed in response to an interaction trigger operation, where the interactive item includes a preset resource setting control used to set an associated resource; and in response to a resource edit operation performed on the resource setting control, an associated resource may be generated based on edited resource information. With the technical solution, the associated resource may be set to implement interaction even in the process of live streaming of the target live stream, so as to satisfy differentiated interaction requirements of users.

Specifically, the step in which the associated resource is generated based on the edited resource information in response to the resource edit operation performed on the resource setting control includes the steps described below. In response to a control trigger operation performed on the resource setting control, resource setting information is displayed, where the resource setting information includes at least content setting information and quantity setting information of a resource; and in response to an edit trigger operation input based on the resource setting information, the associated resource is generated based on the edited resource information.

In S120, acquisition guide information corresponding to the associated resource is sent to a target group in response to a sending request for the associated resource.

The acquisition guide information may be understood as information used to guide a user on how to acquire the associated resource, or in other words, information that presents an acquiring manner of the associated resource. The target group may be understood as a position used to display the acquisition guide information.

The method in the embodiment of the present disclosure is applicable to a streaming host end or a management client of a live streaming application. The target group may be a group corresponding to the live streaming application or a group corresponding to another application other than the live streaming application. The group may be understood as a shared communication space for a community established by a plurality of live streaming accounts. The other application may be an application including an instant messaging tool.

Specifically, in a case where the target group corresponds to an application other than the live streaming application, the step in which the acquisition guide information corresponding to the associated resource is sent to the target group may include the steps described below. An application identification of at least one application other than the live streaming application that corresponds to the associated resource is displayed; and in response to a selection trigger operation on the application identification, the acquisition guide information corresponding to the associated resource is sent to a target application corresponding to the selected application identification. With the technical solution, the associated resource is sent to the application other than the live streaming application, which expands a sending scope of the associated resource, implements cross-application interaction, and provides a bridge for interaction between the target live stream and users of the application other than the live streaming application.

There may be one or more applications other than the live streaming application that correspond to the associated resource. The application identification may be an identification in the form of a pattern and/or text. Exemplarily, the step of displaying the application identification of the at least one application other than the live streaming application that corresponds to the associated resource may specifically include the operations described below. The at least one application other than the live streaming application that corresponds to the associated resource is determined, and the application identification of the other application is displayed in sequence according to a preset sorting rule; or the at least one application other than the live streaming application that corresponds to the associated resource is determined, an application type corresponding to each said another application is determined, and the application identifications of the applications other than the live streaming application are presented by category according to the application type.

Optionally, the step in which the acquisition guide information corresponding to the associated resource is sent to the application other than the live streaming application that corresponds to the selected application identification includes the steps described below. A jump is made to an application page of the application other than the live streaming application, where at least one group identification is presented on the application page; and in response to an identification selection operation on the group identification, a group corresponding to the selected group identification is determined as the target group, and the associated resource is sent to the target group.

In a case where the target group is a group associated with a live streaming account corresponding to the target live stream, the step in which the acquisition guide information corresponding to the associated resource is sent to the target group may specifically include the steps described below. A group associated with the live streaming account corresponding to the target live stream is displayed; and in response to a selection trigger operation on the group, the acquisition guide information corresponding to the associated resource is sent to the selected group. With the technical solution, group sending of the acquisition guide information may be implemented, and the scope of resources for the associated resource is expanded, thereby enabling a wider scope of interaction of the associated resource and providing more possibilities for the interactive resource of the target live stream.

Optionally, in a case where there are a plurality of target groups, a display order of the plurality of target groups is associated with an operation permission of a live streaming account corresponding to the target live stream in the target groups and/or activity of the target groups. The operation permission may include a management permission or a comment permission item. The activity is associated with at least one of the information described below: information on an information publishing time in the group, information on the number of pieces of information published, or information on the number of live streaming accounts in the group. In addition, the plurality of groups may also be displayed according to information such as names, types, and the number of group members.

Specifically, the step in which the acquisition guide information corresponding to the associated resource is sent to the target group may include the step described below. The acquisition guide information corresponding to the associated resource is generated, and the acquisition guide information is sent to the target group.

Optionally, the step of generating the acquisition guide information corresponding to the associated resource includes the operations described below. The acquisition guide information corresponding to the associated resource is generated based on a default information presentation form; or a form identification of a candidate information presentation form is displayed, and then, in response to a selection trigger operation on the form identification, the acquisition guide information corresponding to the associated resource is generated based on the information presentation form corresponding to the selected form identification. Specifically, the information presentation form includes one of or a combination of a plurality of forms such as a link form, a picture form, and a text form.

Exemplarily, the acquisition guide information includes a live stream link and/or an acquisition guidance picture, where the acquisition guidance picture includes an entry identification of the target live stream and/or a preset acquisition password corresponding to the associated resource. The live stream link may be understood as information in the form of a link or a hyperlink generated based on an access address of the target live stream. The entry identification may be understood as a live stream address presented in clear text. Exemplarily, the entry identification of the live stream may be a QR code that may be scanned and identified to enter the target live stream. The preset acquisition password may be preset information for triggering acquiring of the associated resource in the target live stream, for example, a character string composed of a plurality of words and/or numbers. With the technical solution, the target live stream corresponding to the associated resource may be quickly located through the acquisition guide information, so that the user may acquire the associated resource quickly and conveniently.

In the technical solutions of the embodiments of the present disclosure, the associated resource corresponding to the target live stream is generated in response to the resource setting request for the target live stream, which supports flexible setup of the associated resource for the target live stream; and then, the acquisition guide information corresponding to the associated resource is sent to the target group in response to the sending request for the associated resource, through which efficient sending of the associated resource is implemented through the acquisition guide information and the target group, and linkage between acquiring of the associated resource and the target live stream is implemented. The technical problem of limited interactive manners and scope of interaction in live streaming in related technologies is solved, and the interactive manners of the target live stream may be increased and the scope of interaction may be broadened, thereby enriching the live streaming effect of the target live stream.

Fig. 2 is a schematic flowchart of another live streaming interaction method according to an embodiment of the present disclosure. On the basis of the preceding embodiment, the technical solution of this embodiment further specifies the correlation between acquiring of an associated resource and a live state of a target live stream. For the specific implementation, reference may be made to the description of this embodiment. The technical features the same as or similar to those in the preceding embodiment are not repeated here.

As shown in Fig. 2, the method in the embodiment of the present disclosure may specifically include the steps described below.

In S210, an associated resource corresponding to a target live stream is generated in response to a resource setting request for the target live stream.

In S220, acquisition guide information corresponding to the associated resource is sent to a target group in response to a sending request for the associated resource, such that an acquiring end displays response information corresponding to an acquisition trigger operation in response to receiving the acquisition trigger operation for the acquisition guide information.

The acquisition trigger operation may be understood as an operation that triggers an acquiring process of the associated resource. As mentioned above, the acquisition guide information includes the description of the acquiring manner of the associated resource. Therefore, the acquisition trigger operation may be input based on an acquisition prompt given in the acquisition guide information.

As mentioned above, the acquisition guide information may include at least one of a live stream link of the target live stream, an entry identification, or a preset acquisition password corresponding to the associated resource. Optionally, the step of responding to the acquisition trigger operation input based on the acquisition guide information includes at least one of the operations described below. A link trigger operation performed on the live stream link is responded to; a password trigger operation of inputting the preset acquisition password in the target live stream is responded to; or an identification trigger operation input for the entry identification of the target live stream in the acquisition guidance picture is responded to. Exemplarily, the link trigger operation performed on the live stream link may be an operation of clicking on the live stream link. The identification trigger operation input for the entry identification of the target live stream in the acquisition guidance picture may be an operation of scanning and identifying the entry identification. With the technical solution, a variety of acquisition trigger operations may be provided, which enriches acquisition interaction manners and increases interaction flexibility and interest.

In the embodiment of the present disclosure, the response information is determined based on a live state of the target live stream and an attribute of the associated resource. The attribute of the associated resource may include information used to identify whether the associated resource is valid and information associated with a sub-resource in the associated resource. Exemplarily, the attribute of the associated resource may include information such as a name of the associated resource and content and a quantity of the sub-resource included in the associated resource. With the technical solution, linkage between acquiring of the associated resource and the live state of the target live stream and the attribute of the associated resource may be implemented.

Optionally, the step of displaying the response information corresponding to the acquisition trigger operation includes the steps described below. In a case where the live state of the target live stream is live streaming, a resource acquiring control is displayed in the target live stream; and in response to a control trigger operation performed on the resource acquiring control, in a case where the attribute of the associated resource satisfies a preset condition, a sub-resource corresponding to the associated resource is updated to a target account, where the preset condition includes at least that there is an unacquired sub-resource in the associated resource.

The resource acquiring control may be understood as a functional control that is used to acquire the associated resource after being triggered. The resource acquiring control may be a virtual element displayed corresponding to the acquisition guide information. Exemplarily, the resource acquiring control may be a picture-type control presented in the form of a pop-up window. Exemplarily, the picture-type resource acquiring control is presented in the form of a pop-up window in a preset display region of the target live stream. The preset display region may be a region located in the middle of the target live stream.

Optionally, the step of presenting the resource acquiring control in the target live stream specifically includes the steps described below. A live streaming platform associated with the target live stream is opened, live stream guidance information corresponding to the target live stream is presented on an application live streaming page of the live streaming application, and in response to an information trigger operation input based on the live stream guidance information, a jump is made to the target live stream. The application live streaming page may be understood as a live streaming page presented when the live streaming application is opened, that is, a first frame. Display logic of the application live streaming page corresponding to different application users may be the same or different. Which application live streaming page is displayed is not specifically limited here. It may be understood that different acquiring ends may present the same or different live streaming pages when the live streaming application is opened. Even for the same acquiring end, the live streaming pages presented when the live streaming application is opened at different times may be the same or different.

The live stream guidance information is used to guide a user to enter the target live stream. Exemplarily, the live stream guidance information may be prompt information for a next acquiring operation, such as "Please search for XXX and enter the live stream of XXX", or the live stream guidance information may be a live stream link control. By triggering the live stream link control, a jump is automatically made to the target live stream. On this basis, the live stream guidance information may further include one or more of the information described below: live streaming summary information of the target live stream, such as live stream cover information, live streaming account information, and live streaming theme information.

Exemplarily, the control trigger operation may be an operation of clicking on, pressing, dragging, or sliding the resource acquiring control. The preset condition may be understood as a condition used to identify whether the attribute of the associated resource is a value of an attribute in an acquirable state. Specifically, the preset condition may include at least that there is an unacquired sub-resource in the associated resource.

In a case where the attribute of the associated resource satisfies the preset condition, a target account corresponding to the sub-resource corresponding to the associated resource may be acquired, and then the sub-resource is updated to the target account. The target account may be understood as an account used to acquire the associated resource.

Optionally, the step of determining and displaying the response information corresponding to the acquisition trigger operation includes the step described below. In a case where the live state of the target live stream is not live streaming, live state prompt information corresponding to the target live stream is displayed.

The live state prompt information may be information that prompts the live state of the target live stream at the moment when the acquisition trigger operation occurs, or information that prompts the start time of the last live streaming of the target live stream.

Specifically, the status of not live streaming may include a status of to be live streaming or a status of live streaming already ended. Optionally, in a case where the live state of the target live stream is not live streaming, if the effective time of the associated resource is earlier than the end time of the last live streaming of the target live stream, the live state of the target live stream is determined as live streaming already ended. If the effective time of the associated resource is later than the end time of the last live streaming of the target live stream, or the effective time of the associated resource is the start time of the live streaming of the target live stream or is later than the start time of the live streaming, the live state of the target live stream is determined as to be live streaming.

In the embodiment of the present disclosure, in a case where the sub-resource in the associated resource has been acquired completely, acquiring information of the resource may further be displayed. The acquiring information may include at least part of an identification of the acquiring end. The acquiring information may further include an acquisition association time. The acquisition association time may specifically include a total duration from the effectiveness of the associated resource to the completion of the acquiring thereof, and/or an acquisition time point of each acquiring end, etc.

According to the technical solution of the embodiment of the present disclosure, different response strategies may be executed in different live streaming states of the target live stream in response to the acquisition trigger operation input based on the acquisition guide information. In a case where the target live stream is live streaming, a jump may be automatically made to the target live stream by triggering the acquisition guide information, so that the target live stream may be entered quickly and conveniently. Moreover, the sub-resource corresponding to the associated resource may be acquired through the resource acquiring control, thereby implementing interaction between a streaming host and a viewer in the target live stream. Further, even in a case where the target live stream is to be live streaming or the live streaming thereof has already ended, the live state prompt information corresponding to the target live stream may be displayed, so that the user may know an acquiring result of the associated resource in time and intuitively.

On the basis of any optional technical solution of the embodiment of the present disclosure, optionally, after the associated resource corresponding to the target live stream is generated, the method further includes the step described below. In a case where it is detected that interaction information in the target live stream is preset acquiring information corresponding to the associated resource and that an attribute of the associated resource satisfies a preset condition, a sub-resource in the associated resource is updated to an interaction account corresponding to the interaction information.

The interaction information may be understood as information sent based on a preset interaction control in the target live stream. The preset interaction control may be understood as a preset functional control used for interaction. For example, the preset interaction control may be a comment input control, and in this case, the interaction information may be comment information input based on the comment input control. Exemplarily, the preset acquiring information may be a preset acquisition password, such as a preset character string.

The technical solution is particularly applicable to a user who has already entered the target live stream. The user may use the function of acquiring the resource of the red envelope to be sent only through the preset acquisition password without exiting the live stream to check the acquisition guide information of the associated resource, which makes the operation simple and convenient and has a wider scope of application.

It should be noted that the associated resource is unacquired during the live streaming of the target live stream. In other words, the effective time of the associated resource is the live streaming start time or another time after the live streaming start time. It may be understood that, in order to ensure that the associated resource may be effective during the live streaming to implement interaction in the target live stream, the effective time of the associated resource should be no later than the end time of the live streaming of the target live stream. Considering that the end time of the live streaming may change and cannot be accurately known before the live streaming starts, a threshold for a time difference between the effective time of the associated resource and the live streaming start time may be set to, for example, 5 minutes, 10 minutes, or 15 minutes. Specifically, the live streaming start time may be used as an earliest effective time, and a sum of the live streaming start time and the threshold for the time difference may be used as a latest effective time. The effective time of the associated resource may be the earliest effective time, a time between the earliest effective time and the latest effective time, or the latest effective time. With the preceding technical features, it may be ensured that the associated resource is effective during the live streaming, thereby ensuring smooth live streaming and interaction and improving the live streaming effect.

Exemplarily, the live state of the target live stream may include to be live streaming, live streaming (that is, in the process of live streaming), and live streaming already ended. The attribute of the associated resource may specifically be a characteristic associated with whether the associated resource is acquirable. Exemplarily, the attribute may include effectiveness, the number of included sub-resources, and acquisition statuses of the included sub-resources (such as completely acquired or not completely acquired). The effectiveness may be determined based on an acquirable time interval of the associated resource. Specifically, the time interval may be a preset duration, for example, 10 minutes or half an hour, or the time interval may be a preset effective time point and a preset expiration time point, such as 13:00 to 13:30 on a certain date.

After the acquisition trigger operation input based on the acquisition guide information is received, the live state of the target live stream may be determined first, and then the response information corresponding to the acquisition trigger operation is determined in combination with the live state of the target live stream and the attribute of the associated resource.

The response information may be understood as feedback information generated for the acquisition trigger operation. Exemplarily, the response information may include at least acquisition status information, which may specifically be information used to indicate a success or a failure of the acquiring. In the case of a successful acquisition, detailed information, such as a name and a quantity, of the acquired sub-resource may further be displayed. In the case of a failure in acquiring, a reason for the failure in acquiring and/or guidance information for a successful acquisition may further be displayed. The response information may be presented in one of or a combination of a plurality of forms such as an audio form, a text form, and a picture form, which is not specifically limited here.

According to the technical solution of the embodiment of the present disclosure, the acquiring end displays the response information corresponding to the acquisition trigger operation in response to receiving the acquisition trigger operation for the acquisition guide information, through which efficient sending of the associated resource is implemented through the acquisition guide information and the target group, and the acquiring manner of the associated resource is provided, so that the associated resource may fully play the role of interacting with the target live stream, thereby further enriching the manners of interacting with the target live stream.

Fig. 3 is a schematic structural diagram of a live streaming interaction apparatus according to an embodiment of the present disclosure. As shown in Fig. 3, the live streaming interaction apparatus includes an associated resource setting module 310 and a guidance information sending module 320.

The associated resource setting module 310 is configured to generate an associated resource corresponding to a target live stream in response to a resource setting request for the target live stream, and the guidance information sending module 320 is configured to send acquisition guide information corresponding to the associated resource to a target group in response to a sending request for the associated resource.

In the technical solutions of the embodiments of the present disclosure, the associated resource corresponding to the target live stream is generated in response to the resource setting request for the target live stream, which supports flexible setup of the associated resource for the target live stream; and then, the acquisition guide information corresponding to the associated resource is sent to the target group in response to the sending request for the associated resource, through which efficient sending of the associated resource is implemented through the acquisition guide information and the target group, and linkage between acquiring of the associated resource and the target live stream is implemented. The technical problem of limited interactive manners and scope of interaction in live streaming in related technologies is solved, and the interactive manners of the target live stream may be increased and the scope of interaction may be broadened, thereby enriching the live streaming effect of the target live stream.

On the basis of the preceding optional technical solutions, optionally, the associated resource setting module 310 is configured to generate the associated resource corresponding to the target live stream in response to the resource setting request for the target live stream before the target live stream starts live streaming.

On the basis of the preceding optional technical solutions, optionally, the associated resource setting module 310 is configured to display a resource setting interface in response to a trigger operation on a resource setting entry of the target live stream and to generate the associated resource corresponding to the target live stream in response to an input operation on the resource setting interface.

On the basis of the preceding optional technical solutions, optionally, the guidance information sending module 320 is further configured to send the acquisition guide information corresponding to the associated resource to the target group in response to the sending request for the associated resource, such that an acquiring end displays response information corresponding to an acquisition trigger operation in response to receiving the acquisition trigger operation for the acquisition guide information.

On the basis of the preceding optional technical solutions, optionally, the response information is determined based on a live state of the target live stream and an attribute of the associated resource.

On the basis of the preceding optional technical solutions, optionally, the associated resource setting module 310 is configured to present a resource acquiring control in the target live stream in a case where the live state of the target live stream is live streaming and to update a sub-resource corresponding to the associated resource to a target account in response to a control trigger operation performed on the resource acquiring control in a case where the attribute of the associated resource satisfies a preset condition, where the preset condition includes at least that there is an unacquired sub-resource in the associated resource.

On the basis of the preceding optional technical solutions, optionally, the associated resource setting module 310 is configured to:
display live state prompt information corresponding to the target live stream in a case where the live state of the target live stream is not live streaming.

On the basis of the preceding optional technical solutions, optionally, the target group includes a group associated with a live streaming account corresponding to the target live stream; and in a case where there are a plurality of target groups, a display order of the plurality of target groups is associated with an operation permission of the live streaming account corresponding to the target live stream in the target groups and/or activity of the target groups.

On the basis of the preceding optional technical solutions, optionally, the live streaming interaction apparatus further includes an interaction acquiring module. The interaction acquiring module is configured to, after the associated resource corresponding to the target live stream is generated, update a sub-resource in the associated resource to an interaction account corresponding to interaction information in a case where it is detected that the interaction information in the target live stream is preset acquiring information corresponding to the associated resource and that an attribute of the associated resource satisfies a preset condition.

The live streaming interaction apparatus provided by the embodiment of the present disclosure may perform the live streaming interaction method provided by any embodiment of the present disclosure and has function modules and beneficial effects corresponding to the method performed.

It is worth noting that the units and modules included in the preceding apparatus are just divided according to functional logic but are not limited to such division, as long as the corresponding functions may be implemented. In addition, the specific names of the functional units are just for distinguishing between each other but not to limit the scope of protection of the embodiments of the present disclosure.

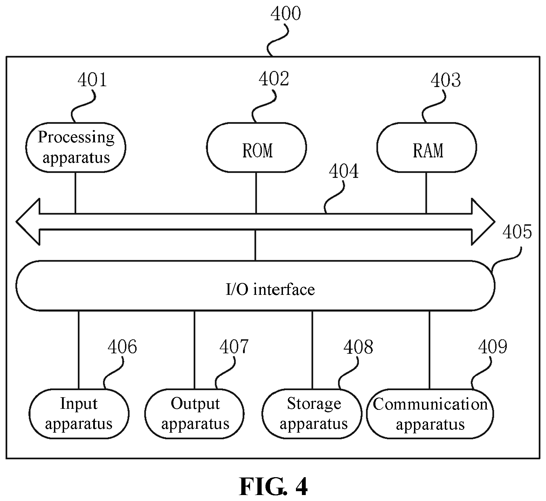

Fig. 4 is a schematic structural diagram of an electronic device according to an embodiment of the present disclosure. Reference is made to Fig. 4 below, which illustrates a schematic structural diagram of an electronic device (such as a terminal device or a server in Fig. 4) 400 suitable for implementing the embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer, a portable media player (PMP), and a vehicle-mounted terminal (such as a vehicle-mounted navigation terminal), and fixed terminals such as a digital TV and a desktop computer. The electronic device shown in Fig. 4 is merely an example and should not impose any limitation on the function and scope of use of the embodiments of the present disclosure.

As shown in Fig. 4, the electronic device 400 may include a processing apparatus (such as a central processing unit and a graphics processing unit) 401, which may perform various suitable actions and processing according to a program stored in a read-only memory (ROM) 402 or a program loaded into a random-access memory (RAM) 403 from a storage apparatus 408. The RAM 403 further stores various programs and data required for the operation of the electronic device 400. The processing apparatus 401, the ROM 402, and the RAM 403 are connected to each other through a bus 404. An editing/output (I/O) interface 405 is also connected to the bus 404.

Usually, the following apparatuses may be connected to the I/O interface 405: an input apparatus 406 including, for example, a touch screen, a touchpad, a keyboard, a mouse, a camera, a microphone, an accelerometer, and a gyroscope; an output apparatus 407 including, for example, a liquid crystal display (LCD), a speaker, and a vibrator; the storage apparatus 408 including, for example, a magnetic tape and a hard disk; and a communication apparatus 409. The communication apparatus 409 may allow the electronic device 400 to perform wireless or wired communication with other devices to exchange data. Although Fig. 4 shows the electronic device 400 having various apparatuses, it should be understood that it is not required to implement or provide all the illustrated apparatuses. Alternatively, more or fewer apparatuses may be implemented or provided.

In particular, according to the embodiments of the present disclosure, the process described above with reference to the flowchart may be implemented as a computer software program. For example, the embodiments of the present disclosure include a computer program product, which includes a computer program carried by a non-transitory computer-readable medium, where the computer program contains program code for performing the method shown in the flowchart. In such an embodiment, the computer program may be downloaded and installed from a network via the communication apparatus 409, or installed from the storage apparatus 408, or installed from the ROM 402. When the computer program is executed by the processing apparatus 401, the preceding functions defined in the method of the embodiments of the present disclosure are executed.

The names of messages or information exchanged between a plurality of apparatuses in the implementations of the present disclosure are intended to be illustrative and are not intended to limit the scope of the messages or information.

The electronic device provided by the embodiment of the present disclosure belongs to the same inventive concept as the live streaming interaction method provided by the preceding embodiment. For the technical details not described in detail in this embodiment, reference may be made to the preceding embodiment, and this embodiment has the same beneficial effects as the preceding embodiment.

An embodiment of the present disclosure provides a computer storage medium having a computer program stored thereon, where the program, when executed by a processor, implements the live streaming interaction method provided by the preceding embodiment.

It should be noted that the preceding computer-readable medium in the present disclosure may be a computer-readable signal medium, a computer-readable storage medium, or any combination thereof. The computer-readable storage medium may be, for example, but is not limited to, an electronic, magnetic, optical, electromagnetic, infrared, or semiconductor system, apparatus, or device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, which may be used by or in combination with an instruction execution system, apparatus, or device. In the present disclosure, the computer-readable signal medium may include a data signal propagated on a baseband or as a part of a carrier, and computer-readable program code is carried by the data signal. The data signal propagated in this manner may be in a plurality of forms and includes, but is not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus, or device. The program code contained on the computer-readable medium may be transmitted in any suitable medium, including but not limited to a wire, an optical cable, a radio frequency (RF), or any suitable combination thereof.

In some implementations, a client and a server may communicate using any currently known or future developed network protocol, such as the Hyper Text Transfer Protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The preceding computer-readable medium may be included in the preceding electronic device or may exist alone without being assembled into the electronic device.

The preceding computer-readable medium carries one or more programs that, when executed by the electronic device, cause the electronic device to perform the steps described below. The associated resource corresponding to the target live stream is generated in response to the resource setting request for the target live stream; and the acquisition guide information corresponding to the associated resource is sent to the target group in response to the sending request for the associated resource.

Computer program code for performing operations of the present disclosure may be written in one or more programming languages or a combination thereof, where the programming languages include, but are not limited to, an object-oriented programming language such as Java, Smalltalk, and C++, and further include conventional procedural programming languages such as "C" language or similar programming languages. The program code may be executed entirely on a user computer, partly on a user computer, as a stand-alone software package, partly on a user computer and partly on a remote computer, or entirely on a remote computer or a server. In the case involving the remote computer, the remote computer may be connected to the user computer through any kind of network, including a local area network (LAN) or a wide area network (WAN), or may be connected to an external computer (for example, connected via the Internet using an Internet service provider).

The flowchart and block diagrams in the drawings illustrate the possibly implemented architectures, functions, and operations of the system, the method, and the computer program product according to various embodiments of the present disclosure. In this regard, each block in the flowchart or block diagrams may represent a module, a program segment, or a part of code, which includes one or more executable instructions for implementing the specified logical functions. It should also be noted that, in some alternative implementations, the functions marked in the blocks may also occur in an order different from that marked in the drawings. For example, two blocks shown in succession may actually be executed substantially in parallel, or they may sometimes be executed in the reverse order, depending on the functions involved. It should also be noted that each block in the block diagrams and/or the flowchart, and a combination of the blocks in the block diagrams and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of a unit does not constitute a limitation on the unit itself under certain circumstances, and for example, the first acquisition unit may also be described as "a unit that acquires at least two internet protocol addresses".

The functions described above herein may be at least partially performed by one or more hardware logic components. For example, without limitation, exemplary types of the hardware logic components that may be used include a field programmable gate array (FPGA), an application specific integrated circuit (ASIC), an application specific standard product (ASSP), a system on chip (SOC), a complex programmable logical device (CPLD), etc.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the preceding. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any suitable combination of the preceding.

According to one or more embodiments of the present disclosure, [Example 1] provides a live streaming interaction method, which includes the steps described below. An associated resource corresponding to a target live stream is generated in response to a resource setting request for the target live stream; and acquisition guide information corresponding to the associated resource is sent to a target group in response to a sending request for the associated resource.

According to one or more embodiments of the present disclosure, [Example 2] provides the method of Example 1 and further includes the step described below.

Optionally, the step in which the associated resource corresponding to the target live stream is generated in response to the resource setting request for the target live stream includes the steps described below. A resource setting interface is displayed in response to a trigger operation on a resource setting entry of the target live stream; and the associated resource corresponding to the target live stream is generated in response to an input operation on the resource setting interface.

According to one or more embodiments of the present disclosure, [Example 3] provides the method of Example 1 and further includes the step described below. Optionally, the step in which the associated resource corresponding to the target live stream is generated in response to the resource setting request for the target live stream includes the steps described below. A resource setting interface is displayed in response to a trigger operation on a resource setting entry of the target live stream; and the associated resource corresponding to the target live stream is generated in response to an input operation on the resource setting interface.

According to one or more embodiments of the present disclosure, [Example 4] provides the method of Example 1 and further includes the step described below. Optionally, the step in which the acquisition guide information corresponding to the associated resource is sent to the target group in response to the sending request for the associated resource includes the step described below. The acquisition guide information corresponding to the associated resource is sent to the target group in response to the sending request for the associated resource, such that an acquiring end displays response information corresponding to an acquisition trigger operation in response to receiving the acquisition trigger operation for the acquisition guide information.

According to one or more embodiments of the present disclosure, [Example 5] provides the method of Example 1 and further includes the step described below. Optionally, the response information is determined based on a live state of the target live stream and an attribute of the associated resource.

According to one or more embodiments of the present disclosure, [Example 6] provides the method of Example 5 and further includes the step described below. Optionally, the step of displaying the response information corresponding to the acquisition trigger operation includes the steps described below. In a case where the live state of the target live stream is live streaming, a resource acquiring control is displayed in the target live stream; and in response to a control trigger operation performed on the resource acquiring control, in a case where the attribute of the associated resource satisfies a preset condition, a sub-resource corresponding to the associated resource is updated to a target account, where the preset condition includes at least that there is an unacquired sub-resource in the associated resource.

According to one or more embodiments of the present disclosure, [Example 5] provides the method of Example 1 and further includes the step described below. Optionally, the step of determining the response information corresponding to the acquisition trigger operation includes the step described below. In a case where the live state of the target live stream is not live streaming, live state prompt information corresponding to the target live stream is displayed.

According to one or more embodiments of the present disclosure, [Example 8] provides the method of Example 1 and further includes the step described below. Optionally, the target group includes a group associated with a live streaming account corresponding to the target live stream; and in a case where there are a plurality of target groups, a display order of the plurality of target groups is associated with an operation permission of the live streaming account corresponding to the target live stream in the target groups and/or activity of the target groups.

According to one or more embodiments of the present disclosure, [Example 9] provides the method of Example 1 and further includes the step described below. Optionally, after the associated resource corresponding to the target live stream is generated, the method further includes the step described below. In a case where it is detected that interaction information in the target live stream is preset acquiring information corresponding to the associated resource and that an attribute of the associated resource satisfies a preset condition, a sub-resource in the associated resource is updated to an interaction account corresponding to the interaction information.

According to one or more embodiments of the present disclosure, [Example 10] provides a live streaming interaction apparatus, which includes an associated resource setting module and a guidance information sending module. The associated resource setting module is configured to generate an associated resource corresponding to a target live stream in response to a resource setting request for the target live stream; and the guidance information sending module is configured to send acquisition guide information corresponding to the associated resource to a target group in response to a sending request for the associated resource.

The preceding description illustrates merely preferred embodiments of the present disclosure and explanations of the applied technical principles. Those skilled in the art should understand that the scope of disclosure involved in the present disclosure is not limited to the technical solutions formed by specific combinations of the preceding technical features and shall also cover other technical solutions formed by any combination of the preceding technical features or equivalent features thereof without departing from the preceding concept of disclosure. For example, the preceding features and the technical features provided in the present disclosure (but not limited to) with similar functions may be replaced each other to form a technical solution.

In addition, although the respective operations are depicted in a specific order, it should not be understood as requiring these operations to be performed in the specific order shown or in a sequential order. Under specific circumstances, multitasking and parallel processing may be advantageous. Similarly, although the preceding discussion contains a number of implementation-specific details, these details should not be interpreted as limiting the scope of the present disclosure. Certain features that are described in the context of separate embodiments may also be implemented in combination in a single embodiment. Conversely, various features described in the context of a single embodiment may also be implemented in a plurality of embodiments individually or in any suitable sub-combination.

Although the subject matter has been described in language specific to structural features and/or logical actions of the method, it should be understood that the subject matter defined in the appended claims is not necessarily limited to the specific features or actions described above. Conversely, the specific features and actions described above are merely exemplary forms for implementing the claims.

## Claims

1. A live streaming interaction method, comprising:
generating, in response to a resource setting request for a target live stream, an associated resource corresponding to the target live stream; and
sending, in response to a sending request for the associated resource, acquisition guide information corresponding to the associated resource to a target group.

2. The live streaming interaction method of claim 1, wherein generating, in response to the resource setting request for the target live stream, the associated resource corresponding to the target live stream, comprises:
before the target live stream starts live streaming, generating, in response to the resource setting request for the target live stream, the associated resource corresponding to the target live stream.

3. The live streaming interaction method of claim 1, wherein generating, in response to the resource setting request for the target live stream, the associated resource corresponding to the target live stream, comprises:
displaying, in response to a trigger operation on a resource setting entry of the target live stream, a resource setting interface; and
generating, in response to an input operation on the resource setting interface, the associated resource corresponding to the target live stream.

4. The live streaming interaction method of claim 1, wherein sending, in response to the sending request for the associated resource, the acquisition guide information corresponding to the associated resource to the target group, comprises:
sending, in response to the sending request for the associated resource, the acquisition guide information corresponding to the associated resource to the target group, such that an acquiring end displays response information corresponding to an acquisition trigger operation in response to receiving the acquisition trigger operation for the acquisition guide information.

5. The live streaming interaction method of claim 1 or 4, wherein the response information is determined based on a live state of the target live stream and an attribute of the associated resource.

6. The live streaming interaction method of claim 5, wherein displaying the response information corresponding to the acquisition trigger operation comprises:
displaying, in response to the live state of the target live stream being in live-streaming state, a resource acquiring control in the target live stream; and
updating, in response to a control trigger operation performed on the resource acquiring control and the attribute of the associated resource satisfying a preset condition, a sub-resource corresponding to the associated resource to a target account, wherein the preset condition comprises at least an unacquired sub-resource exists in the associated resource.

7. The live streaming interaction method of claim 5, wherein displaying the response information corresponding to the acquisition trigger operation comprises:
displaying, in response to the live state of the target live stream being in a non-live-streaming state, live state prompt information corresponding to the target live stream.

8. The live streaming interaction method of claim 1, wherein the target group comprises a group associated with a live streaming account corresponding to the target live stream, and in response to a plurality of target groups existing, a display order of the plurality of target groups is associated with an operation permission of the live streaming account corresponding to the target live stream in the target groups and/or activity of the target groups.

9. The live streaming interaction method of claim 1, wherein after generating the associated resource corresponding to the target live stream, the method further comprises:
updating, in response to interaction information in the target live stream being preset acquiring information corresponding to the associated resource and an attribute of the associated resource satisfying a preset condition, a sub-resource in the associated resource to an interaction account corresponding to the interaction information.

10. A live streaming interaction apparatus, comprising:
an associated resource setting module configured to generate, in response to a resource setting request for a target live stream, an associated resource corresponding to the target live stream; and
a guidance information sending module configured to send, in response to a sending request for the associated resource, acquisition guide information corresponding to the associated resource to a target group.

11. An electronic device, comprising:
one or more processors; and
a storage configured to store one or more programs,
wherein the one or more programs, when executed by the one or more processors, cause the one or more processors to implement the live streaming interaction method of any of claims 1 to 9.

12. A storage medium comprising computer-executable instructions that, when executed by a computer processor, are configured to perform the live streaming interaction method of any of claims 1 to 9.

13. A computer program product comprising a computer program that, when executed by a processor, implements the live streaming interaction method of any of claims 1 to 9.
